(19) **Europäisches Patentamt**
**European Patent Office**
**Office européen des brevets**

(11) **EP 2 961 221 B1**

(12) **EUROPEAN PATENT SPECIFICATION**

(45) Date of publication and mention
of the grant of the patent:
**21.02.2018  Bulletin 2018/08**

(51) Int Cl.:
**H04W 24/10** *(2009.01)*       **H04W 72/04** *(2009.01)*

(21) Application number: **15178232.3**

(22) Date of filing: **01.10.2012**

(54) **RADIO COMMUNICATION SYSTEM, FEEDBACK METHOD, USER TERMINAL, AND RADIO BASE STATION APPARATUS**

FUNKKOMMUNIKATIONSSYSTEM, RÜCKKOPPLUNGSVERFAHREN, BENUTZERENDGERÄT, UND FUNKBASISSTATIONSVORRICHTUNG

SYSTÈME DE COMMUNICATION RADIO, PROCÉDÉ DE RÉTROACTION, TERMINAL UTILISATEUR ET APPAREIL DE STATION DE BASE RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.10.2011   JP 2011219571**

(43) Date of publication of application:
**30.12.2015   Bulletin 2015/53**

(62) Document number(s) of the earlier application(s) in accordance with Art. 76 EPC:
**12839071.3 / 2 750 435**

(73) Proprietor: **NTT DOCOMO, INC.**
**Chiyoda-ku**
**Tokyo 100-6150 (JP)**

(72) Inventors:
• **Nagata, Satoshi**
**Tokyo, 100-6150 (JP)**
• **Abe, Tetsushi**
**Tokyo, 100-6150 (JP)**
• **Kishiyama, Yoshihisa**
**Tokyo, 100-6150 (JP)**

(74) Representative: **Hoffmann Eitle**
**Patent- und Rechtsanwälte PartmbB**
**Arabellastraße 30**
**81925 München (DE)**

(56) References cited:
**WO-A1-2010/036159      WO-A1-2011/115703**
**US-A1- 2011 281 585**

## Description

### TECHNICAL FIELD

The present invention relates to a radio communication system, a feedback method, a user terminal and a radio base station apparatus that are applicable to a cellular system.

### BACKGROUND ART

In the UMTS (Universal Mobile Telecommunications System) network, for the purposes of improving spectral efficiency and improving the data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing high-speed data rates, providing low delay and so on, long-term evolution (LTE) has been under study (non-patent literature 1).

In the third-generation system, it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band which ranges from 1.4 MHz to 20 MHz. Furthermore, in the UMTS network, for the purpose of achieving further broadbandization and higher speed, successor systems of LTE have been under study as well (for example, LTE-Advanced (LTE-A)).

### CITATION LIST

### NON-PATENT LITERATURE

Non-Patent Literature 1: 3GPP, TR 25.912 (V7.1.0), "Feasibility Study for Evolved UTRA and UTRAN," Sept. 2006

WO 2010/036159 A1 describes uplink overhead being significantly reduced in a MU-COMP wireless communication network by exploiting the dissimilarity of received signal strength in signals transmitted by geographically distributed transmit antennas, as seen by receiving UEs. Each UE calculates a quantized normalization measure of channel elements for a channel weakly received from a first transmitter to that for a channel strongly received from a second transmitter. The quantized normalization measure may be modeled as a ratio of complex Gaussian variables, and quantized in phase and amplitude by making simplifying assumptions. The ratios are quantized, and transmitted to the network using far fewer bits than would be required to transmit the full channel state information. The network uses the quantized normalization measures to set the transmitter weights.

US 2011/281585 A1 describes a method for performing a handoff in a CoMP cluster. A user equipment measures a signal to interference-plus-noise ratio (SINR) value of each of the CoMP sets constituted by the combination of a plurality of base stations in one CoMP cluster. Then, the user equipment transmits the SINR value of each of the CoMP sets to a serving base station through a pilot strength measurement message (PSMM). Subsequently, the user equipment receives, from the serving base station, a message which instructs a handoff determined through the transmitted signal to interference-plus-noise ratio (SINR) values.

WO 2011/115703 A1 describes systems, methods, apparatus and articles of manufacture for constructing radio reporting sets and backhaul reporting sets for coordinated multi-point transmission in a wireless communication network. A user equipment UE1 selects a radio reporting set, RRS, of nodes from a measurement set of nodes, and reports CSI for nodes in the RRS to the anchor node. The anchor node selects a backhaul reporting set, BRS, of nodes based on a measure of utility derived from the CSI and implement coordinated multi-point transmission in a transmission set of nodes selected from the BRS.

### SUMMARY OF THE INVENTION

### TECHNICAL PROBLEM

Now, as a promising technique for further improving the system performance of the LTE system, there is inter-cell orthogonalization. For example, in the LTE-A system, intra-cell orthogonalization is made possible by orthogonal multiple access on both the uplink and the downlink. That is to say, on the downlink, orthogonalization is provided between user terminal UEs (User Equipment) in the frequency domain. On the other hand, between cells, like in W-CDMA, interference randomization by repeating one-cell frequency is fundamental.

So, in the 3GPP (3rd Generation Partnership Project), coordinated multiple-point transmission/reception (CoMP) is under study as a technique for realizing inter-cell orthogonalization. In this CoMP transmission/reception, a plurality of cells are coordinated and perform signal processing for transmission and reception for one user terminal UE or for a plurality of user terminal UEs. For example, for the downlink, simultaneous transmission of a plurality of cells, and coordinated scheduling/beam forming, which adopt precoding, are under study. By adopting these CoMP transmission/reception techniques, improvement of throughput performance is expected, especially with respect to user terminal UEs located on cell edges.

When CoMP transmission/reception is adopted, radio base station apparatuses that are arranged in a plurality of cells coordinate and transmit data, and therefore a user terminal UE is required to feed back channel state information, from which adequate received quality can be calculated, when CoMP transmission is adopted.

The present invention has been made in view of the above, and it is therefore an object of the present invention to provide a radio communication system, a feedback method, a user terminal and a radio base station apparatus which make it possible to feed back channel state information, from which adequate received quality can be calculated, when CoMP transmission is adopted.

SOLUTION TO PROBLEM

A radio communication system according to the present invention is a radio communication system including a plurality of radio base station apparatuses and a user terminal that is configured to communicate with the plurality of radio base station apparatuses, and, in this radio communication system: the radio base station apparatuses include: a transmission section configured to transmit a reference signal for channel state measurement to the user terminal; and a receiving section configured to receive channel state information generated in the user terminal based on the reference signal; and the user terminal includes: a channel state information generating section configured to generate a plurality of pieces of channel state information, including channel state information from which interference from a coordinated cell is cancelled, when the plurality of radio base station apparatuses coordinate and perform transmission; and a transmission section configured to transmit the plurality of pieces of channel sate information to the radio base station apparatus. The channel state information generating section generates generates one of the plurality of pieces of channel state information. that is represented by a ratio of a received signal component from a serving cell and a received signal component from a coordinated cell, when the plurality of radio base station apparatuses coordinate and perform transmission.

TECHNICAL ADVANTAGE OF THE INVENTION

According to the present invention, it is possible to feed back channel state information, from which adequate received quality can be calculated, when CoMP transmission is adopted.

BRIEF DESCRIPTION OF DRAWINGS

FIG. 1 provides diagrams to explain coordinated multiple point transmission;
FIG. 2 provides schematic diagrams to show configurations of radio base station apparatuses that are adopted in coordinated multiple point transmission/reception;
FIG. 3 is a schematic diagram to explain a CQI generation method in a user terminal;
FIG. 4 provides diagrams to explain CSI-RS allocation patterns in resource blocks;
FIG. 5 provides diagrams to explain muting in CQI measurement using CSI-RSs;
FIG. 6 is a diagram to explain radio resources on the uplink;
FIG. 7 provides schematic diagrams to show CQI transmission timing on the uplink;
FIG. 8 is a diagram to explain a system configuration of a radio communication system;
FIG. 9 is a block diagram to show an overall configuration of a radio base station apparatus;
FIG. 10 is a block diagram to show an overall configuration of a user terminal;
FIG. 11 is a block diagram to show a configuration of a baseband processing section in a centralized control-type radio base station apparatus;
FIG. 12 is a block diagram to show a configuration of a baseband processing section in an autonomous distributed control-type radio base station apparatus; and
FIG. 13 is a block diagram to show a configuration of a baseband signal processing section in a user terminal.

DESCRIPTION OF EMBODIMENTS

Now, an embodiment of the present invention will be described below in detail with reference to the accompanying drawings.

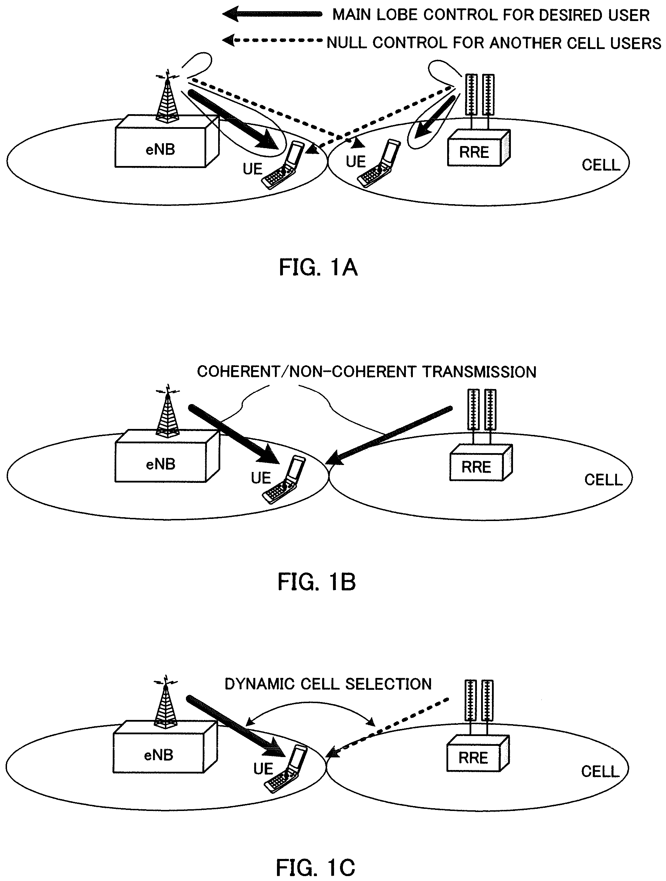

First, downlink CoMP transmission will be described using FIG. 1. Downlink CoMP transmission includes coordinated scheduling/coordinated beamforming (hereinafter referred to as "CS/CB"), and joint processing. CS/CB refers to a method of transmitting from only one cell to one user terminal UE, and allocates radio resources in the frequency/space domain, taking into account interference from other cells and interference against other cells, as shown in FIG. 1A. On the other hand, joint processing refers to a method of simultaneous transmission from a plurality of cells by adopting precoding, and includes joint transmission to transmit from a plurality of cells to one user terminal UE as shown in FIG. 1B, and dynamic cell selection to select cells instantaneously as shown in FIG. 1C.

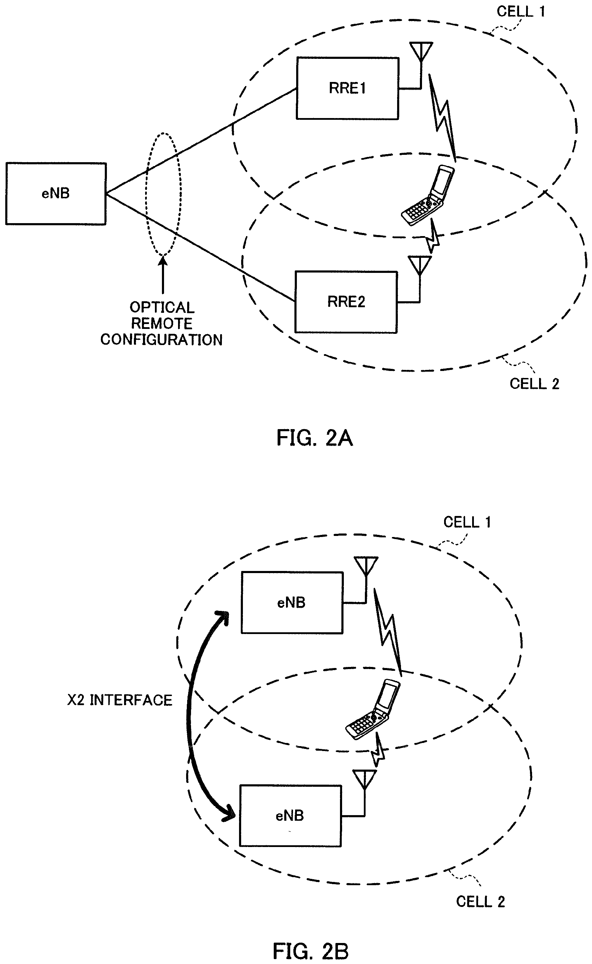

As a configuration to realize CoMP transmission/reception, there are, for example, a configuration (centralized control based on an RRE configuration) to include a plurality of remote radio equipment (RREs) that are connected to a radio base station apparatus (radio base station apparatus eNB) by optical fiber and so on, as shown in FIG. 2A, and a configuration (autonomous distributed control based on an independent base station configuration) of a radio base station apparatus (radio base station apparatus eNB), as shown in FIG. 2B. Note that, although FIG. 2A shows a configuration to include a plurality of remote radio equipment RREs, it is equally possible to use a configuration to include single remote radio equipment RRE, as shown in FIG. 1.

In the configuration shown in FIG. 2A (RRE configuration), remote radio equipment RRE 1 and RRE 2 are controlled in a centralized fashion in a radio base station apparatus eNB. In the RRE configuration, a radio base station apparatus eNB (centralized base station) that performs baseband signal processing and control for a plurality of remote radio equipment RREs, and each cell (that is, each remote radio equipment RRE), are connected by baseband signals using optical fiber, so that it is possible to execute radio resource control between the cells in the centralized base station altogether. That is, the problems of signaling delay and overhead between radio base station apparatus eNBs, which become problems in an independent base station configuration, are insignificant, and high-speed radio resource control between cells is relatively easy. Consequently, in the RRE configuration, it is possible to adopt, on the downlink, a method to use fast signal processing between cells such as simultaneous transmission of a plurality of cells.

On the other hand, in the configuration shown in FIG. 2B (independent base station configuration), a plurality of radio base station apparatus eNBs (or RREs) each perform radio resource allocation control such as scheduling. In this case, by using the X2 interface between the radio base station apparatus eNB of the cell 1 and the radio base station apparatus eNB of the cell 2, radio resource allocation information such as timing information and scheduling is transmitted to one of the radio base station apparatus eNBs when necessary, thereby coordinating between the cells.

In the CoMP transmission (CS/CB) shown in FIG. 1A, a user terminal UE measures channel quality based on a reference signal (CSI-RS: Channel State Information-Reference Signal) transmitted from a radio base station apparatus eNB, and generates channel quality information (CQI: Channel Quality Indicator). To be more specific, an SINR (Signal to Interference and Noise Ratio) is calculated based on the CSI-RS, and a CQI to match the calculated SINR is selected. The selected CQI is fed back to the radio base station apparatus eNB on the uplink. The radio base station apparatus eNB calculates the SINR based on the CQI that is fed back from the user terminal UE, and, for example, determines the modulation scheme and coding rate for data transmission, executes scheduling control, and so on.

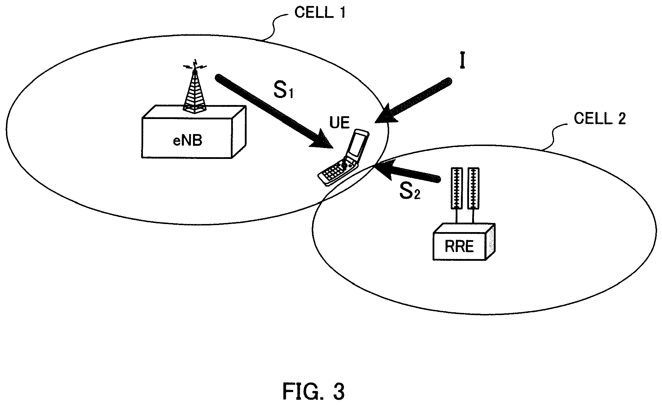

To determine the modulation scheme and coding rate for data transmission and execute scheduling control as described above, for example, the SINR to be calculated from the CQI that is fed back from the user terminal UE is used. Now, the method of generating CQIs to be fed back from a user terminal UE will be described. FIG. 3 is a schematic diagram to explain a method of generating CQIs in a user terminal UE. Note that although FIG. 3 shows an RRE configuration, the same applies to an independent base station configuration as well.

In a system of the LTE scheme (LTE system) where the CoMP transmission/reception technique is not adopted, the SINR (=$FB_1$) with respect to the received level of the cell 1 and the SINR (=$FB_2$) with respect to the received level of the cell 2 are determined by following formulas 1 and 2, respectively. Note that, in the following formulas, "$S_1$" stands for the received signal component (power) from the cell 1 (radio base station apparatus eNB), "$S_2$" stands for the received signal component (power) from the cell 2 (remote radio equipment RRE), "I" stands for interference components (power) from cells other than the cell 1 and the cell 2, and "N" stands for noise components (power). The SINRs determined by formulas 1 and 2 are fed back to the radio base station apparatus eNB as CQIs.

[1]

$$FB_1 = \frac{S_1}{S_2 + I + N} \quad \cdots \text{(Formula 1)}$$

[2]

$$FB_2 = \frac{S_2}{S_1 + I + N} \quad \cdots \text{(Formula 2)}$$

On the other hand, when CoMP transmission (CS/CB) is adopted, the SINR of each cell needs to be calculated taking into account the transmission weights by which the received signal components $S_1$ and $S_2$ are multiplied in the radio base station apparatus eNB and the remote radio equipment RRE. For example, the SINR with respect to the received level of the cell 1 when CS (Coordinated Scheduling) is adopted needs to be determined by following formula 3 in the radio base station apparatus eNB. Also, the SINR with respect to the received level of the cell 1 when CB (Coordinated Beamforming) is adopted needs to be determined by following formula 4 in the radio base station apparatus eNB. Note that, in the formulas, "$w_1$" stands for the transmission weight by which the signal from the cell 1 is multiplied in the radio base station apparatus eNB so as to be received as the received signal component $S_1$ in the user terminal UE, and "$w_2$" stands for the transmission weight by which the signal from the cell 2 is multiplied in the radio base station apparatus eNB so as to be received as the received signal component $S_2$ in the user terminal UE. That is to say, "$w_1S_1$" corresponds to the transmitting signal component that is transmitted from the cell 1 on the assumption of being received as the received signal components $S_1$ in the user terminal UE, and "$w_2S_2$" corresponds to the transmitting signal component that is transmitted from the cell 2 on the assumption of being received as the received signal components $S_2$ in the user terminal UE. The SINR with respect to the received level of the cell 2 can also be determined from formulas that are equivalent to formulas 3 and 4.

[3]

$$SINR = \frac{w_1 S_1}{I + N} \quad \cdots \text{(Formula 3)}$$

[4]

$$SINR = \frac{w_1 S_1}{w_2 S_2 + I + N} \quad \cdots \text{(Formula 4)}$$

As described above, in the LTE system, the SINRs to be determined by formulas 1 and 2 are fed back as CQIs. The base station apparatus eNB calculates SINRs based on these CQIs. However, when CoMP transmission (CS/CB) is adopted, as shown in formulas 3 and 4, it is necessary to take into account the transmission weights $w_1$ and $w_2$ by which the received signal components $S_1$ and $S_2$ from the cell 1 and the cell 2 are multiplied, and therefore it is not possible to calculate SINRs accurately, only from the CQIs that are fed back based on formulas 1 and 2. Consequently, when the CQI feedback method of the LTE system is adopted, there is a problem that the radio base station apparatus eNB is unable to calculate adequate SINRs when CoMP transmission (CS/CB) is adopted, and therefore is unable to execute downlink transmission control adequately.

The present inventors have focused on this point and arrived at the present invention upon finding out that, when CoMP transmission (CS/CB) is adopted, adequate downlink transmission control is made possible by allowing a radio base station apparatus eNB to acquire feedback information, from which adequate SINRs can be calculated.

That is to say, a gist of the present invention is that, when CoMP transmission (CS/CB) is adopted, a user terminal UE feeds back channel state information that allows a radio base station apparatus eNB to calculate adequate received quality. Now, specific modes will be described below with reference to the network configuration shown in FIG. 3.

(First Mode)

Embodiment not claimed. With the feedback method according to the first mode, in a state in which interference between cells that perform CoMP transmission is cancelled, CQIs related to the received levels of both the serving cell (the cell 1 shown in FIG. 3) and a coordinated cell (the cell 2 shown in FIG. 3) are fed back. In the feedback method according to the present mode, feedback information, which is CQIs, is defined by following formulas 5 and 6. In the feedback method according to the present mode, interference of the serving cell or the coordinated cell is cancelled by adopting muting (zero-power transmission), which is under study in the system of the LTE-A scheme (LTE-A system).

[5]

$$FB_A = \frac{S_1}{I+N} \quad \dots (Formula\ 5)$$

[6]

$$FB_B = \frac{S_2}{I+N} \quad \dots (Formula\ 6)$$

Before muting to be used to cancel interference between cells that perform CoMP transmission is described, the CSI-RS, which is under study for the downlink of the LTE-A system, will be described. The CSI-RS is a reference signal to be used to measure channel states (CSI measurement), including, for example, CQIs, PMIs (Precoding Matrix Indicators), and RIs (Rank Indicators). Unlike CRSs (Cell-specific Reference Signals) that are allocated to all subframes, CSI-RSs are allocated in a predetermined cycle -- for example, in a 10-subframe cycle. Also, CSI-RSs are specified by the parameters of position, sequence and transmission power. The positions of CSI-RSs include subframe offset, cycle and subcarrier-symbol offset (index).

In one resource block defined in LTE, CSI-RSs are allocated not to overlap control signals such as the PDCCH (Physical Downlink Control Channel) signal, user data such as the PDSCH (Physical Downlink Shared Channel) signal, and other reference signals such as CRSs and DM-RSs (DeModulation-Reference Signals). One resource block consists of twelve subcarriers that are consecutive in the frequency direction and fourteen symbols that are consecutive in the time axis direction. From the perspective of suppressing the PAPR (Peak-to-Average Power Ratio), two resource elements that neighbor each other in the time axis direction are allocated as a set, as resources which can transmit a CSI-RS.

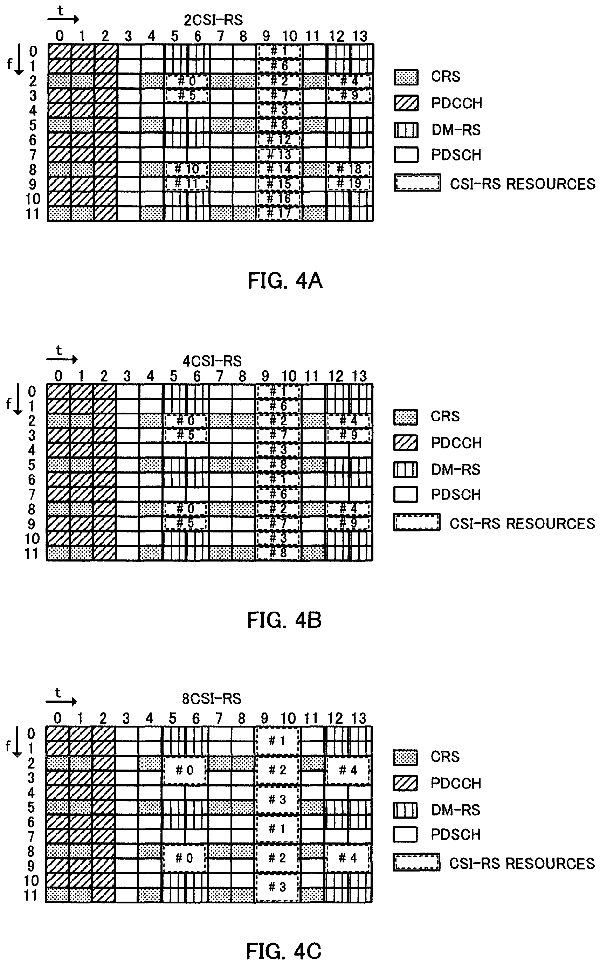

In the CSI-RS configurations shown in FIG. 4, forty resource elements are secured as CSI-RS resources (reference signal resources). In these forty resource elements, CSI-RS patterns (CSI configuration) are set according to the number of CSI-RS ports (the number of antennas). In each CSI-RS pattern, one resource element is allocated for a CSI-RS, for every one CSI-RS port. When the number of CSI-RS ports is two, CSI-RSs are allocated to two resource elements among the forty resource elements. As for the allocation pattern, for example, one of the twenty patterns (indices #0 to #19) shown in FIG. 4A is selected.

When the number of CSI-RS ports is four, CSI-RSs are allocated to four resource elements among the forty resource elements. As for the allocation pattern, for example, one of the ten patterns (indices #0 to #9) shown in FIG. 4B is selected. When the number of CSI-RS ports is eight, CSI-RSs are allocated to eight resource elements among the forty resource elements. As for the allocation pattern, for example, one of the five patterns (indices #0 to #4) shown in FIG. 4C is selected. Note that, in the CSI-RS patterns, user data is allocated to resource elements where CSI-RSs are not allocated. Then, in the CSI-RSs, interference between cells is reduced by selecting different CSI-RS patterns on a per cell basis.

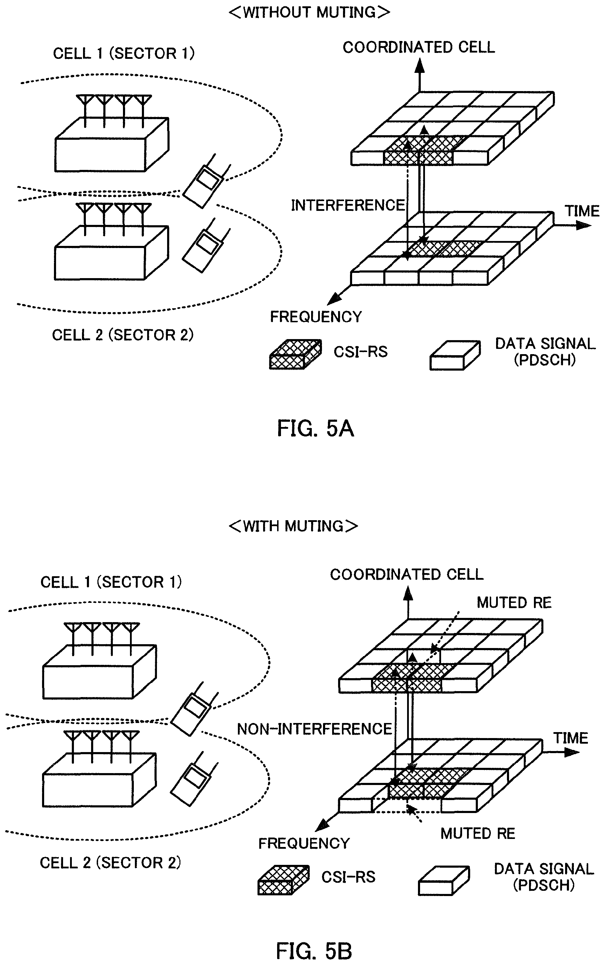

Now, in CSI measurement using CSI-RSs, cases might occur where the accuracy of measurement is deteriorated by data interference from other cells. For example, in the case shown in FIG. 5A, user data is allocated to downlink resource blocks of the cell 1 (serving cell) that correspond to the CSI-RS of the cell 2 (coordinated cell). Also, user data is allocated to downlink resource blocks of the cell 2 that correspond to the CSI-RS of the cell 1. Such user data may become interference components against the CSI-RS of each cell, and in particular, become a factor to deteriorate the accuracy of CQI measurement in user terminal UEs located near the border between the cell 1 and the cell 2.

In order to improve the deterioration of the accuracy of CQI measurement due to the positions where user data is allocated, muting is under study. In muting, as shown in FIG. 5B, user data is not allocated to resources corresponding to the CSI-RS of another cell. To be more specific, downlink resource blocks of the cell 1 are muted (zero power transmission) in accordance with the CSI-RS of the cell 2. Also, downlink resource blocks of the cell 2 are muted (zero power transmission) in accordance with the CSI-RS of the cell 1. By means of this configuration, interference components against CSI-RSs, arising from user data of other cells, is cancelled, so that it is possible to improve the accuracy of CQI measurement in user terminal UEs.

With the feedback method according to the present mode, in CQI measurement, it is possible to cancel interference of the serving cell or a coordinated cell by using the above-described muting, and acquire feedback information defined by formulas 5 and 6.

To be more specific, as shown in FIG. 5B, in the resource block of the cell 2, resources corresponding to the CSI-RS of the cell 1 are set as muting resources, and the transmission power of the target resources is made zero. By this means, in the CQI measurement of the cell 1, which is the serving cell, it is possible to remove interference of the cell 2, which is a coordinated cell. That is, it is possible to acquire feedback information in a mode not including the

received signal component $S_2$ from the cell 2 (the feedback information defined in formula 5), as the CQI of the cell 1.

Also, as shown in FIG. 5B, in the resource block of the cell 1, resources corresponding to the CSI-RS of the cell 2 are set as muting resources, and the transmission power of the target resources is made zero. By this means, in the CQI measurement of the cell 2, which is a coordinated cell, it is possible to remove interference of the cell 1, which is the serving cell. That is, it is possible to acquire feedback information of a mode not including the received signal component $S_1$ from the cell 1 (the feedback information defined in formula 6), as the CQI of the cell 2.

By means of the feedback information defined by formulas 5 and 6, the radio base station apparatus eNB is able to calculate the SINRs defined by formulas 3 and 4. For example, the SINR with respect to the received level of the cell 1 when CS is adopted is calculated from formulas 3 and 5, as shown in formula 7. On the other hand, the SINR with respect to the received level of the cell 1 when CB is adopted is calculated from formulas 4, 5 and 6, as shown in formula 8. Note that, when CoMP transmission is not adopted, the SINR with respect to the received level of the cell 1 is calculated as shown in formula 9. $w_1$ and $w_2$, which represent the transmission weight of each cell, are determined in the radio base station apparatus eNB, and are known in the radio base station apparatus eNB.

[7]

$$SINR = \frac{w_1 S_1}{I+N} = w_1 FB_A \quad \ldots (\text{Formula } 7)$$

[8]

$$SINR = \frac{w_1 S_1}{w_2 S_2 + I + N} = \frac{w_1 FB_A}{w_2 FB_B + 1} \quad \ldots (\text{Formula } 8)$$

[9]

$$SINR = \frac{w_1 S_1}{S_2 + I + N} = \frac{w_1 FB_A}{FB_B + 1} \quad \ldots (\text{Formula } 9)$$

In this way, by using the feedback information defined by formulas 5 and 6, even when CoMP transmission (CS/CB) is adopted, it is possible to calculate adequate SINRs in the radio base station apparatus eNB.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate feedback information (CQI) in a mode not including the received signal component $S_2$, as shown in formula 5, by being reported, from the radio base station apparatus eNB, that the received signal component ($S_2$) of the cell 2 does not have to be taken into account (that is, the received signal component $S_2$ is not to be included in interference components).

Note that the SINR with respect to the received level of the cell 2 can be calculated in a similar way to the SINR of the cell 1, by using formulas 5 and 6. Also, with the feedback method according to the present mode, the feedback information (CQI) and SINRs represented by formulas are by no means limited to the notations in each formula, and may include all that is substantially equivalent given by conversion of formulas and so on.

(Second Method)

The embodiment not claimed. With the feedback method according to a second mode, in a state where interference of one cell performing CoMP transmission is cancelled, the CQI of the serving cell (the cell 1 shown in FIG. 3) is fed back. With the feedback method according to the present mode, feedback information is defined by following formulas 10 and 11. The feedback information of formula 10 is acquired under interference of a coordinated cell (the cell 2 shown in FIG. 3) in CoMP. The feedback information of formula 11 can be acquired by cancelling interference from the coordinated cell (the cell 2) in CoMP.

[10]

$$FB_C = \frac{S_1}{S_2 + I + N} \quad \dots (\text{Formula } 10)$$

[11]

$$FB_D = \frac{S_1}{I + N} \quad \dots (\text{Formula } 11)$$

The feedback information defined by formula 10 is the same as the feedback information defined in the LTE system (see formula 1).

The feedback information defined by formula 11 can be acquired by cancelling interference from the cell 2, which is a coordinated cell, in the CQI measurement of the cell 1, which is the serving cell. To be more specific, in the resource block of the cell 2, resources corresponding to the CSI-RS of the cell 1 are set as muting resources, and the transmission power of the target resources is made zero.

By means of the feedback information defined by formulas 10 and 11, the radio base station apparatus eNB is able to calculate the SINRs defined by formulas 3 and 4. For example, the SINR with respect to the received level of the cell 1 when CS is adopted is calculated from formulas 3 and 11, as shown in formula 12. On the other hand, the SINR with respect to the received level of the cell 1 when CB is adopted is calculated from formulas 4, 10 and 11, as shown in formula 13. Note that, when CoMP transmission is not adopted, the SINR with respect to the received level of the cell 1 is calculated as shown in formula 14. $w_1$ and $w_2$, which represent the transmission weight of each cell, are determined in the radio base station apparatus, and are known in the radio base station apparatus.

[12]

$$SINR = \frac{w_1 S_1}{I + N} = w_1 FB_D \quad \dots (\text{Formula } 12)$$

[13]

$$SINR = \frac{w_1 S_1}{w_2 S_2 + I + N} = \frac{w_1 FB_D}{w_2 \left( \dfrac{FB_D}{FB_C} - 1 \right) + 1} \quad \dots (\text{Formula } 13)$$

[14]

$$SINR = \frac{w_1 S_1}{S_2 + I + N} = w_1 FB_C \quad \dots (\text{Formula } 14)$$

In this way, by using the feedback information defined by formulas 10 and 11, even when CoMP transmission (CS/CB) is adopted, it is possible to calculate adequate SINRs in the radio base station apparatus eNB. In particular, with the feedback method according to the present mode, information (formula 10) that is common to the feedback information defined in the LTE system is used, so that it is possible to calculate adequate SINRs while maintaining changes from the LTE system, required upon CQI measurement, minimal.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate feedback information (CQI) in a mode not including the received signal component $S_2$, as shown in formula 11, by being reported, from the radio base station apparatus eNB, that the received signal component ($S_2$) of the cell 2 does not have to be taken into account (that is, the received signal component $S_2$ is not to be included in interference components).

Note that the SINR with respect to the received level of the cell 2 can be calculated in a similar way to the SINR of the cell 1. Also, with the feedback method according to the present mode, the feedback information (CQI) and SINRs represented using formulas are by no means limited to the notations in each formula, and may include all that is substantially equivalent given by conversion of formulas and so on.

(Third Mode)

The embodiment not claimed. With the feedback method according to a third mode, in a state where interference of one cell performing CoMP transmission is cancelled, the CQI of the serving cell (the cell 1 shown in FIG. 3) is fed back. With the feedback method according to the present mode, feedback information is defined by following formulas 15 and 16. The feedback information of formula 15 is acquired by cancelling interference of a coordinated cell (the cell 2 shown in FIG. 3) in CoMP. The feedback information of formula 16 can be acquired under interference from the coordinated cell (the cell 2) in CoMP.

[15]

$$FB_{\mathrm{E}} = \frac{S_1}{I+N} \quad \ldots \text{(Formula 15)}$$

[16]

$$FB_{\mathrm{F}} = \frac{S_1}{S_2} \quad \ldots \text{(Formula 16)}$$

The feedback information defined by formula 15 can be acquired by cancelling interference from the cell 2, which is a coordinated cell, in the CQI measurement of the cell 1, which is the serving cell. To be more specific, in the resource block of the cell 2, resources corresponding to the CSI-RS of the cell 1 are set as muting resources, and the transmission power of the target resources is made zero.

The feedback information defined by formula 16 can be acquired, under interference of the cell 2, which is a coordinated cell, as the ratio of the received signal component ($S_1$) from the cell 1, which is the serving cell, and the received signal component ($S_2$) from the cell 2, which is a coordinated cell.

By means of the feedback information defined by formulas 15 and 16, the radio base station apparatus eNB is able to calculate the SINRs represented by formulas 3 and 4. For example, the SINR with respect to the received level of the cell 1 when CS is adopted is calculated from formulas 3 and 15, as shown in formula 17. On the other hand, the SINR with respect to the received level of the cell 1 when CB is adopted is calculated from formulas 4, 15 and 16, as shown in formula 18. Note that, when CoMP transmission is not adopted, the SINR with respect to the received level of the cell 1 is calculated as shown in formula 19. $w_1$ and $w_2$, which represent the transmission weight of each cell, are determined in the radio base station apparatus, and are known in the radio base station apparatus.

[17]

$$SINR = \frac{w_1 S_1}{I+N} = w_1 FB_{\mathrm{E}} \quad \ldots \text{(Formula 17)}$$

[18]

$$SINR = \frac{w_1 S_1}{w_2 S_2 + I + N} = \frac{w_1 FB_{\mathrm{E}} FB_{\mathrm{F}}}{w_2 FB_{\mathrm{E}} + FB_{\mathrm{F}}} \quad \ldots \text{(Formula 18)}$$

[19]

$$SINR = \frac{w_1 S_1}{S_2 + I + N} = \frac{w_1 FB_E}{\dfrac{FB_E}{FB_F} + 1} \qquad \dots \text{(Formula 19)}$$

In this way, by using the feedback information defined by formulas 15 and 16, even when CoMP transmission (CS/CB) is adopted, it is possible to calculate adequate SINRs in the radio base station apparatus eNB. With the feedback method according to the present mode, feedback information (formula 16) to be defined by the ratio of received signal components is used, so that it is possible to reduce the number of bits that relate to transmission of feedback information.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate the ratio of $S_1$ and $S_2$ (signal power ratio) in the mode shown in formula 16, by being reported, from the radio base station apparatus eNB, to calculate the ratio of the received signal component ($S_1$) of the cell 1 and the received signal component ($S_2$) of the cell 2.

Note that the SINR with respect to the received level of the cell 2 can be calculated in a similar way to the SINR of the cell 1. Also, with the feedback method according to the present mode, the feedback information (CQI) and SINRs represented using formulas are by no means limited to the notations in each formula, and may include all that is substantially equivalent given by conversion of formulas and so on.

(Fourth Mode)

The embodiment claimed. With the feedback method according to the fourth mode, the CQI of the serving cell (the cell 1 shown in FIG. 3) is fed back without cancelling interference between cells that perform CoMP transmission. With the feedback method according to the present mode, feedback information is defined by following formulas 20 and 21. The feedback information of formulas 20 and 21 is acquired under interference of a coordinated cell in CoMP (the cell 2 shown in FIG. 3).

[20]

$$FB_G = \frac{S_1}{S_2 + I + N} \qquad \dots \text{(Formula 20)}$$

[21]

$$FB_H = \frac{S_1}{S_2} \qquad \dots \text{(Formula 21)}$$

The feedback information defined by formula 20 is the same as the feedback information defined in the LTE system (see formula 1).

The feedback information defined by formula 21 can be acquired, under interference of the cell 2, which is a coordinated cell, as the ratio of the received signal component ($S_1$) from the cell 1, which is the serving cell, and the received signal component ($S_2$) from the cell 2, which is a coordinated cell.

By means of the feedback information defined by formulas 20 and 21, the radio base station apparatus eNB is able to calculate the SINRs represented by formulas 3 and 4. For example, the SINR with respect to the received level of the cell 1 when CS is adopted is calculated from formulas 3, 20 and 21, as shown in formula 22. On the other hand, the SINR with respect to the received level of the cell 1 when CB is adopted is calculated from formulas 4, 20 and 21, as shown in formula 23. Note that, when CoMP transmission is not adopted, the SINR with respect to the received level of the cell 1 is calculated as shown in formula 24. $w_1$ and $w_2$, which represent the transmission weight of each cell, are determined in the radio base station apparatus eNB, and are known in the radio base station apparatus eNB.

[22]

$$SINR = \frac{w_1 S_1}{I+N} = \frac{w_1 FB_G}{1 - FB_G FB_H} \quad \cdots \text{(Formula 22)}$$

[23]

$$SINR = \frac{w_1 S_1}{w_2 S_2 + I + N} = \frac{w_1 FB_G}{1 - (1 - w_2) FB_G FB_H} \quad \cdots \text{(Formula 23)}$$

[24]

$$SINR = \frac{w_1 S_1}{S_2 + I + N} = w_1 FB_G \quad \cdots \text{(Formula 24)}$$

In this way, by using the feedback information defined by formulas 20 and 21, even when CoMP transmission (CS/CB) is adopted, it is possible to calculate adequate SINRs in the radio base station apparatus eNB. With the feedback method according to the present mode, information (formula 20) that is common to the feedback information defined in the LTE system is used, so that it is possible to calculate adequate SINRs while maintaining changes from the LTE system, required upon CQI measurement, minimal. Also, since feedback information (formula 21) to be defined by the ratio of received signal components is used, it is possible to reduce the number of bits that relate to transmission of feedback information.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate the ratio of $S_1$ and $S_2$ (signal power ratio) in the mode shown in formula 21, by being reported, from the radio base station apparatus eNB, to calculate the ratio of the received signal component ($S_1$) of the cell 1 and the received signal component ($S_2$) of the cell 2.

Note that the SINR with respect to the received level of the cell 2 can be calculated in a similar way to the SINR of the cell 1. Also, with the feedback method according to the present mode, the feedback information (CQI) and SINRs represented by formulas are by no means limited to the notations in each formula, and may include all that is substantially equivalent given by conversion of formulas and so on.

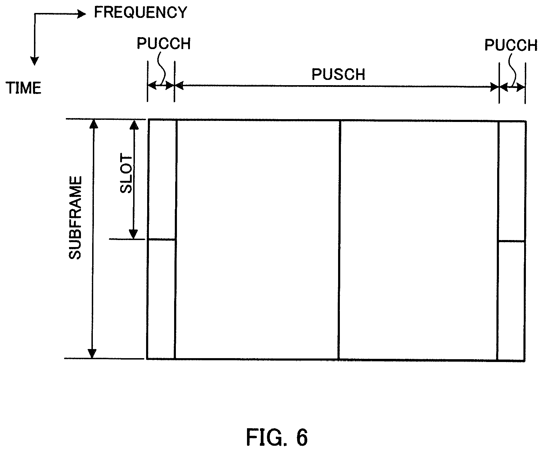

Next, the method of reporting the above-described CQIs generated in a user terminal UE to a radio base station apparatus eNB will be described. In the LTE system, an uplink signal is mapped to radio resources as shown in FIG. 6 and transmitted from the user terminal UE to the radio base station apparatus eNB. For example, uplink user data is transmitted using an uplink shared channel (PUSCH: Physical Uplink Shared Channel). Also, uplink control information (UCI) including CQIs, is transmitted using the PUSCH when transmitted with uplink user data, and transmitted using the uplink control channel (PUCCH: Physical Uplink Control Channel) when transmitted alone.

Now, as shown in FIG. 6, radio resources for the PUCCH are limited to a predetermined frequency band, and therefore the amount of data that can be transmitted using the PUCCH is also limited. So, feedback information (CQI) in the above-described feedback methods according to the first mode to the fourth mode can be transmitted using the PUSCH. In this case, for example, one or both of two types of feedback information that are defined in the above-described feedback methods according to the first mode to the fourth mode may be transmitted based on higher control information that is reported by higher control signals (higher layer signaling) such as RRC signaling. For example, with the feedback method according to the first mode, feedback information $FB_A$ of the serving cell, which may have significant influence on communication, is transmitted on a regular basis, and feedback information $FB_B$ of a coordinated cell may be transmitted only when so commanded by higher control information. The same applies to the other modes as well. By this means, it is possible to use radio resources effectively while maintaining the quality of communication.

Also, in this case, the two types of feedback information may be transmitted altogether or may be transmitted separately, by using the same subframe or by using a plurality of subframes. Furthermore, two types of feedback information may have the same transmission cycle or may have different transmission cycles. For example, with the feedback method according to the first mode, it may be possible to make the transmission cycle of feedback information $FB_A$ of the serving cell, which may have significant influence on communication, short, and make the transmission cycle of feedback information $FB_B$ of a coordinated cell long. The same applies to the other modes as well. In this case, too, it is possible to use radio resources effectively while maintaining the quality of communication.

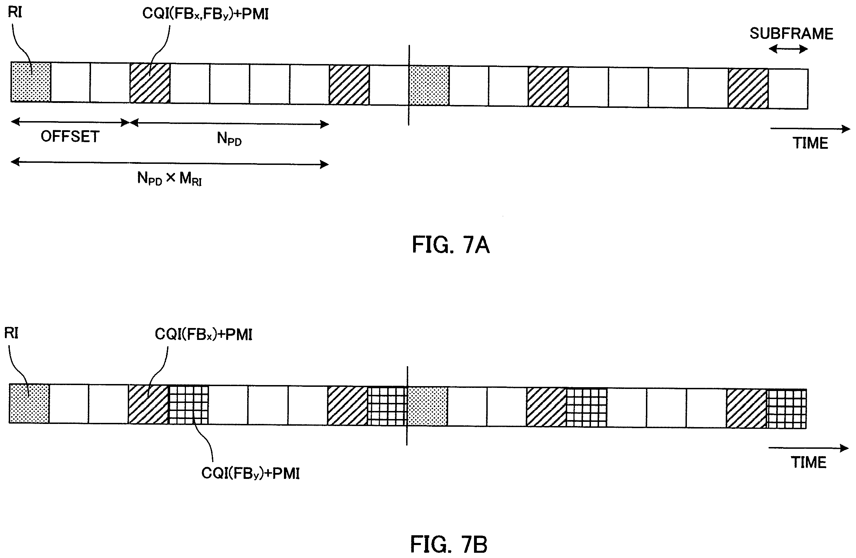

Furthermore, the feedback information (CQI) in the above-described feedback methods according to the first mode to the fourth mode may transmitted by the PUCCH. In this case, as shown in FIG. 7A, it is possible to transmit two types of feedback information (FB$_x$ and FB$_y$) in the same subframe. Also, as shown in FIG. 7B, it is equally possible to transmit two types of feedback information (FB$_x$ and FB$_y$) in different subframes. When the two types of feedback information are transmitted in different subframes, their cycle of transmission may be the same or may be different. For example, with the feedback method according to the first mode, it may be possible to make the transmission cycle of feedback information FB$_A$ of the serving cell, which may have significant influence on communication, short, and make the transmission cycle of feedback information FB$_B$ of a coordinated cell long. The same applies to the other modes as well. By this means, it is possible to use radio resources effectively while maintaining the quality of communication.

Note that it is possible to use the above-described feedback methods according to the first mode to the fourth mode, with the feedback method in the LTE system, on a selective basis. That is to say, it is possible to switch between the feedback method in the LTE system and the above-described feedback methods according to the first mode to the fourth mode, according to whether or not CoMP transmission is adopted. This switching may be done based on, for example, higher control information that is reported by higher control signals. In this way, when CoMP transmission is not adopted, the feedback information according to the feedback method of the LTE system may be used, and, when CoMP transmission is adopted, the feedback information according to the above-described feedback methods according to the first mode to the fourth mode may be used, so that it is possible to execute various control adequately.

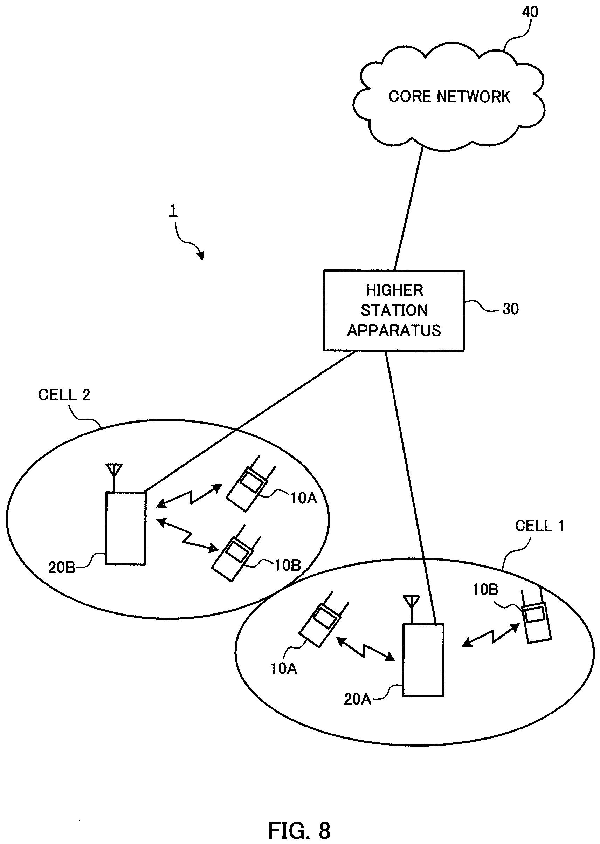

Now, an embodiment of the present invention will be described in detail. FIG. 8 is a diagram to explain a system configuration of a radio communication system according to the present embodiment. Note that the radio communication system shown in FIG. 8 is a system to accommodate, for example, the LTE system or SUPER 3G. This radio communication system uses carrier aggregation, which makes a plurality of fundamental frequency blocks, in which the system band of the LTE system is one unit, as one. Also, this radio communication system may be referred to as "IMT-Advanced" or may be referred to as "4G."

As shown in FIG. 8, a radio communication system 1 is configured to include radio base station apparatuses 20A and 20B and a plurality of the first and second user terminals 10A and 10B that communicate with the radio base station apparatuses 20A and 20B. The radio base station apparatuses 20A and 20B are connected with a higher station apparatus 30, and this higher station apparatus 30 is connected with a core network 40. Also, the radio base station apparatuses 20A and 20B are mutually connected by wire connection or by wireless connection. The first and second user terminals 10A and 10B are able to communicate with the radio base station apparatuses 20A and 20B in cells 1 and 2. Note that the higher station apparatus 30 includes, for example, an access gateway apparatus, a radio network controller (RNC), a mobility management entity (MME) and so on, but is by no means limited to these.

Although the first and second user terminals 10A and 10B may be either LTE terminals or LTE-A terminals, the following description will be given simply with respect to the first and second user terminals 10A and 10B unless specified otherwise. Also, although, for ease of explanation, the radio base station apparatuses 20A and 20B and the first and second user terminals 10A and 10B, which are mobile terminal apparatuses, will be described to perform radio communication, more generally, the first and second user terminals 10A and 10B may be user apparatuses including fixed terminal apparatuses.

In the radio communication system 1, as radio access schemes, OFDMA (Orthogonal Frequency Division Multiple Access) is applied to the downlink, and SC-FDMA (Single-Carrier-Frequency-Division Multiple Access) is applied to the uplink, but the radio access schemes are not limited to these. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Here, communication channels will be described. The downlink communication channels include a PDSCH (Physical Downlink Shared Channel), which is used by the first and second user terminals 10A and 10B as a downlink data channel on a shared basis, and downlink L1/L2 control channels (PDCCH, PCFICH, and PHICH). Transmission data and higher control information are transmitted by the PDSCH. Scheduling information and so on for the PDSCH and the PUSCH are transmitted by the PDCCH (Physical Downlink Control Channel). The number of OFDM symbols to use for the PDCCH is transmitted by the PCFICH (Physical Control Format Indicator Channel). HARQ ACK/NACK for the PUSCH are transmitted by the PHICH (Physical Hybrid-ARQ Indicator Channel).

The uplink communication channels include a PUSCH, which is an uplink data channel used by the user terminals 10A and 10B on a shared basis, and a PUCCH, which is an uplink control channel. By means of this PUSCH, transmission data and higher control information are transmitted. Also, by means of the PUCCH, downlink radio quality information (CQI: Channel Quality Indicator), ACK/NACK and so on are transmitted.

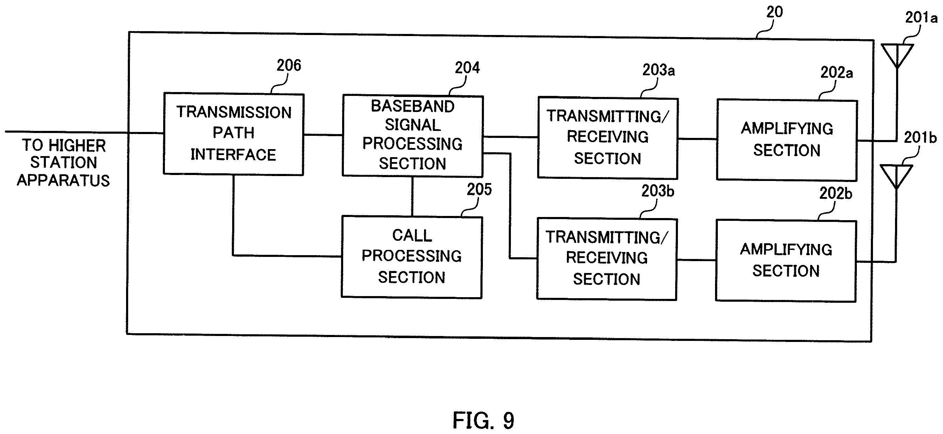

Now, referring to FIG. 9, an overall configuration of a radio base station apparatus according to the present embodiment will be explained. Note that the radio base station apparatuses 20A and 20B have the same configuration and therefore will be described simply as "radio base station apparatus 20." Also, the first and second user terminals 10A and 10B have the same configuration and therefore will be described simply as "user terminal 10." The radio base station apparatus 20 has transmitting/receiving antennas 201a and 201b, amplifying sections 202a and 202b, transmitting/receiving sections 203a and 203b, a baseband signal processing section 204, a call processing section 205, and a transmission path interface 206. Transmission data to be transmitted from the radio base station apparatus 20 to the user terminal 10 on the downlink is input from the higher station apparatus 30, into the baseband signal processing section 204, via the transmission path interface 206.

In the baseband signal processing section 204, a downlink data channel signal is subjected to PDCP layer processes, division and coupling of transmission data, RLC (Radio Link Control) layer transmission processes such as an RLC retransmission control transmission process, MAC (Medium Access Control) retransmission control, including, for example, a HARQ transmission process, scheduling, transport format selection, channel coding, an inverse fast Fourier transform (IFFT) process, and a precoding process. Furthermore, as for the signal of the physical downlink control channel, which is a downlink control channel, transmission processes such as channel coding and an inverse fast Fourier transform are performed.

Also, the baseband signal processing section 204 reports control information for allowing each user terminal 10 to perform radio communication with the radio base station apparatus 20, to the user terminals 10 connected to the same cell, by a broadcast channel. Information for communication in the cell includes, for example, the system bandwidth on the uplink and the downlink, identification information of a root sequence (root sequence index) for generating signals of random access preambles of the PRACH (Physical Random Access Channel), and so on.

Baseband signals that are output from the baseband signal processing section 204 are converted into a radio frequency band in the transmitting/receiving sections 203a and 203b. The amplifying sections 202a and 202b amplify the radio frequency signals having been subjected to frequency conversion, and output the results to the transmitting/receiving antennas 201a and 201b.

On the other hand, as for a signal to be transmitted from the user terminal 10 to the radio base station apparatus 20 on the uplink, radio frequency signals that are received in the transmitting/receiving antennas 201 are amplified in the amplifying sections 202a and 202b, converted into baseband signals by frequency conversion in the transmitting/receiving sections 203a and 203b, and input in the baseband signal processing section 204.

The baseband signal processing section 204 applies an FFT process, an IDFT process, error correction decoding, a MAC retransmission control receiving process, and RLC layer and PDCP layer receiving processes, to transmission data included in a baseband signal that is received on the uplink. The decoded signal is transferred to the higher station apparatus 30 through the transmission path interface 206.

The call processing section 205 performs call processing such as setting up and releasing communication channels, manages the state of the radio base station apparatus 20 and manages the radio resources.

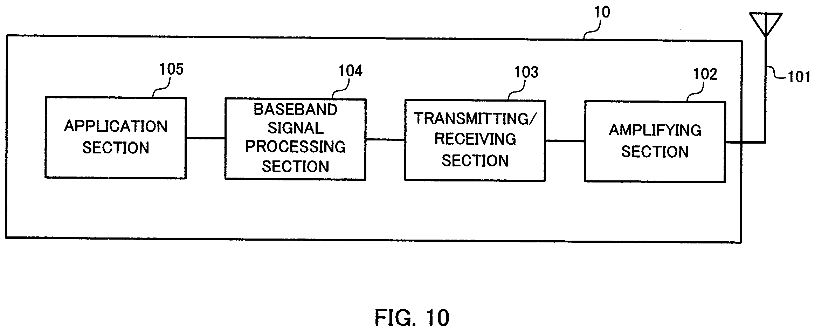

Next, referring to FIG. 10, an overall configuration of a user terminal according to the present embodiment will be described. An LTE terminal and an LTE-A terminal have the same hardware configurations in principle parts, and therefore will be described indiscriminately. A user terminal 10 has a transmitting/receiving antenna 101, an amplifying section 102, a transmitting/receiving section 103, a baseband signal processing section 104, and an application section 105.

As for downlink data, a radio frequency signal that is received in the transmitting/receiving antenna 101 is amplified in the amplifying section 102, and subjected to frequency conversion and converted into a baseband signal in the transmitting/receiving section 103. This baseband signal is subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer. Also, in the downlink data, broadcast information is also transferred to the application section 105.

Meanwhile, uplink transmission data is input from the application section 105 to the baseband signal processing section 104. In the baseband signal processing section 104, a mapping process, a retransmission control (HARQ) transmission process, channel coding, a DFT process, and an IFFT process are performed. The baseband signal output from the baseband signal processing section 104 is converted into a radio frequency band in the transmitting/receiving section 103. After that, the radio frequency signal having been subjected to frequency conversion is amplified in the amplifying section 102 and transmitted from the transmitting/receiving antenna 101.

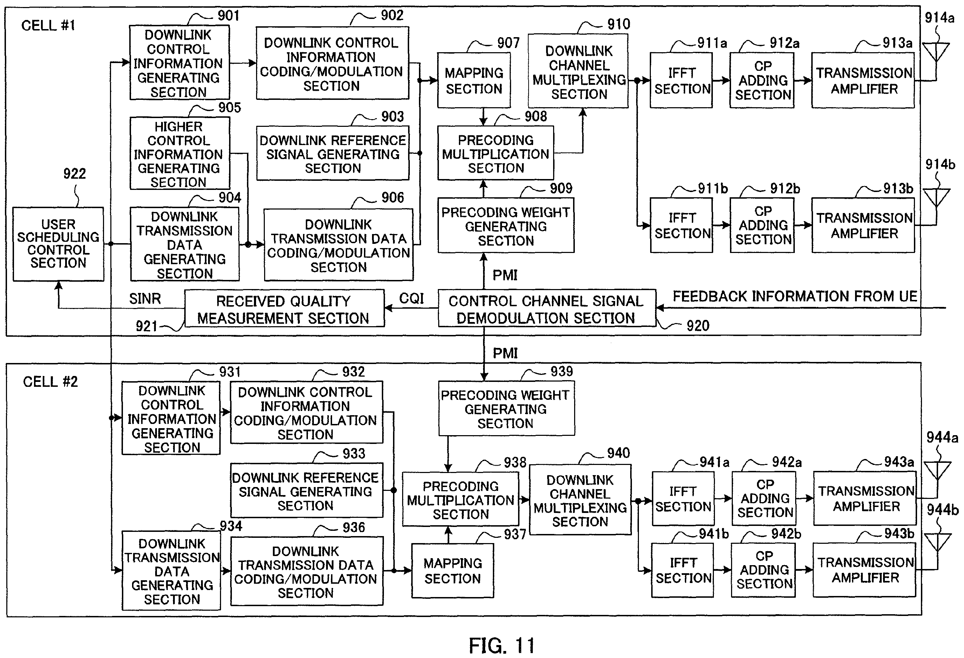

The function blocks of a radio base station apparatus will be described with reference to FIG. 11. The radio base station apparatus shown in FIG. 11 has a centralized control-type radio base station configuration. In the event of centralized control, a given radio base station apparatus (centralized radio base station apparatus, which is the cell 1 in FIG. 11) executes radio resource allocation control such as scheduling, altogether, and a subordinate radio base station apparatus (remote radio equipment, which is the cell 2 in FIG. 11) follows the radio resource allocation result by the radio base station apparatus. In this case, feedback information (CQI) is used as necessary information for radio resource allocation between a plurality of cells and so on, in the user scheduling control section 922 of the radio base station apparatus.

Note that the function blocks of FIG. 11 primarily relate to the processing content of the baseband processing section 204 shown in FIG. 9. Also, the function blocks shown in FIG. 11 are simplified to explain the present invention, and assumed to have the configurations which a baseband processing section 204 should normally have.

The transmission section on the centralized radio base station apparatus (the cell 1) side has a downlink control information generating section 901, a downlink control information coding/modulation section 902, a downlink reference signal generating section 903, a downlink transmission data generating section 904, a higher control information generating section 905 and a downlink transmission data coding/modulation section 906. Also, the transmission section on the centralized radio base station apparatus (the cell 1) side has a mapping section 907, a precoding multiplication section 908, a precoding weight generating section 909, a downlink channel multiplexing section 910, IFFT sections 911 (911a and 911b), CP adding sections 912 (912a and 912b), transmission amplifiers 913 (913a and 913b), transmitting antennas 914 (914a and 914b), a control channel signal demodulation section 920, a received quality measurement section 921, and a user scheduling control section 922. Note that the transmission amplifiers 913 and transmitting antennas 914 correspond to the amplifying sections 202 and transmitting/receiving antennas 201 shown in FIG. 9, respectively.

Meanwhile, the transmission section on the subordinate cell remote radio equipment (the cell 2) side has a downlink control information generating section 931, a downlink control information coding/modulation section 932, a downlink reference signal generating section 933, a downlink transmission data generating section 934, and a downlink transmission data coding/modulation section 936. Also, the transmission section on the subordinate cell remote radio equipment (the cell 2) side has a mapping section 937, a precoding multiplication section 938, a precoding weight generating section 939, a downlink channel multiplexing section 940, IFFT sections 941a and 941b, CP adding sections 942a and 942b, transmission amplifiers 943a and 943b, and transmitting antennas 944a and 944b. Note that the centralized radio base station apparatus and the remote radio equipment of the subordinate cell are connected by, for example, optical fiber.

The downlink control information generating sections 901 and 931 each generate downlink control information in accordance with control by the user scheduling control section 922, and output that downlink control information to the downlink control information coding/modulation sections 902 and 932, respectively. The downlink control information coding/modulation sections 902 and 932 perform channel coding and data modulation for downlink control information and output the result to the mapping sections 907 and 937, respectively.

The downlink reference signal generating sections 903 and 933 generate downlink reference signals (CRS, CSI-RS, DM-RS) and output these downlink reference signals to the mapping sections 907 and 937, respectively. The downlink transmission data generation sections 904 and 934 generate downlink transmission data and output the downlink transmission data to the downlink transmission data coding/modulation sections 906 and 936, respectively.

The higher control information generating section 905 generates higher control information to be transmitted and received by higher layer signaling (for example, RRC signaling), and outputs the generated higher control information to the downlink transmission data coding/modulation section 906. For example, the higher control information generating section 905 generates higher control information that represents whether or not CoMP transmission is adopted, the transmission timing (cycle) of feedback information from the user terminal 10, and so on, which is necessary to switch the feedback method in the user terminal 10.

The downlink transmission data coding/modulation section 906 performs channel coding and data modulation with respect to the downlink transmission data and the higher control information, and outputs the results to the mapping section 907. The downlink transmission data coding/modulation section 936 performs channel coding and data modulation with respect to the downlink transmission data, and outputs the result to the mapping section 937.

The mapping sections 907 and 937 map the downlink control information, downlink reference signal, downlink transmission data and higher control information, and output these to the precoding multiplication sections 908 and 938, respectively. Also, the mapping sections 907 and 937 set the target resources as muting resource when it is necessary to cancel interference from other cells upon CQI measurement.

For example, when the feedback method according to the first mode is adopted and CoMP transmission is performed, in the resource block of the subject cell (the cell 1), the mapping section 907 sets resources corresponding to the CSI-RS of another cell (the cell 2) as muting resources and makes the transmission power of the target resources zero. In the resource block of the subject cell (the cell 2), the mapping section 937 sets resources corresponding to the CSI-RS of another cell (the cell 1) as muting resources and makes the transmission power of the target resources zero.

Also, when the feedback methods according to the second and third modes are adopted and CoMP transmission is performed, in the resource block of the subject cell (the cell 2), the mapping section 937 sets resources corresponding to the CSI-RS of another cell (the cell 1) as muting resources and makes the transmission power of the target resources zero.

The precoding weight generating sections 909 and 939 generate precoding weights based on the PMIs fed back from the user terminal 10, and output the precoding weights to the precoding multiplication sections 908 and 938, respectively. To be more specific, the precoding weight generating sections 909 and 939 each have a codebook and select a precoding weight corresponding to the PMI from the codebook. Note that the PMIs to be utilized in the precoding weight generating sections 909 and 939 are given from the control channel signal demodulation section 920.

The precoding multiplication sections 908 and 938 multiply transmission signals by the precoding weights. That is to say, the precoding multiplication sections 908 and 938 apply a phase shift and/or an amplitude shift, for each of the transmitting antennas 914a and 914b and the transmitting antennas 944a and 944b, based on the precoding weights provided from the precoding weight generating sections 909 and 939, respectively. The precoding multiplication sections 908 and 938 output the transmission signals, to which a phase shift and/or an amplitude shift has been applied, to the downlink channel multiplexing sections 910 and 940, respectively.

The downlink channel multiplexing sections 910 and 940 combines the downlink control information, downlink reference signal, higher control information and downlink transmission data, to which a phase shift and/or an amplitude shift has been applied, and generates transmission signals for each of the transmitting antennas 914a and 914b and the transmitting antennas 944a and 944b. The downlink channel multiplexing sections 910 and 940 output the transmission signals to the IFFT (Inverse Fast Fourier Transform) sections 911a and 911b and the IFFT sections 941a and 941b, respectively.

The IFFT sections 911a and 911b and the IFFT sections 941a and 941b perform an IFFT of the transmission signals, and output the transmission signals after the IFFT to the CP adding sections 912a and 912b and the CP adding sections 942a and 942b. The CP adding sections 912a and 912b and the CP adding sections 942a and 942b add CPs (Cyclic Prefixes) to the transmission signals after the IFFT, and output the transmission signals, to which CPs have been added, to the transmission amplifiers 913a and 913b and the transmission amplifiers 943a and 943b, respectively.

The transmission amplifiers 913a and 913b and the transmission amplifiers 943a and 943b amplify the transmission signals, to which CPs have been added. The amplified transmission signals are transmitted to the user terminal 10, from the transmitting antennas 914a and 914b and the transmitting antennas 944a and 944b, on the downlink, respectively.

The control channel demodulation section 920 demodulates the control channel signal reported from the user terminal 10 by the PUCCH, outputs the PMIs included in the control channel signal to the precoding weight generating sections 909 and 939, and outputs the CQIs to the received quality measurement section 921. Note that, when the CQIs are reported by the PUSCH, an uplink data channel demodulation section, which is not shown, demodulates the uplink transmission data, and output the CQIs included in the uplink transmission data to the received quality measurement section 921.

The received quality measurement section 921 calculates the SINRs, in accordance with the above-described calculation methods of the first to fourth modes, based on the CQIs reported from the control channel demodulation section 920 (or the uplink data channel demodulation section). The calculated SINRs are reported to the user scheduling control section 922. The user scheduling control section 922 executes scheduling control for the downlink control information of each cell, based on the SINRs. Also the SINRs are used to determine the modulation schemes and coding rates in the downlink control information coding/modulation sections 902 and 932 and the downlink transmission data coding/modulation sections 906 and 936.

For example, when the feedback method according to the first mode is adopted and CoMP transmission is performed, the received quality measurement section 921 calculates the SINRs according to formulas 7 and 8. On the other hand, when CoMP transmission is not executed, the SINRs are calculated according to formula 9. Similarly, when the feedback method according to the second mode is adopted and CoMP transmission is executed, the received quality measurement section 921 calculates the SINRs according to formulas 12 and 13. On the other hand, when CoMP transmission is not executed, the SINRs are calculated according to formula 14.

Furthermore, when the feedback method according to the third mode is adopted and CoMP transmission is executed, the received quality measurement section 921 calculates the SINRs according to formulas 17 and 18. On the other hand, when CoMP transmission is not executed, the SINRs are calculated according to formula 19. When the feedback method according to the fourth mode is adopted and CoMP transmission is executed, the received quality measurement section 921 calculates the SINRs according to formulas 22 and 23. On the other hand, when CoMP transmission is not executed, the SINRs are calculated according to formula 24.

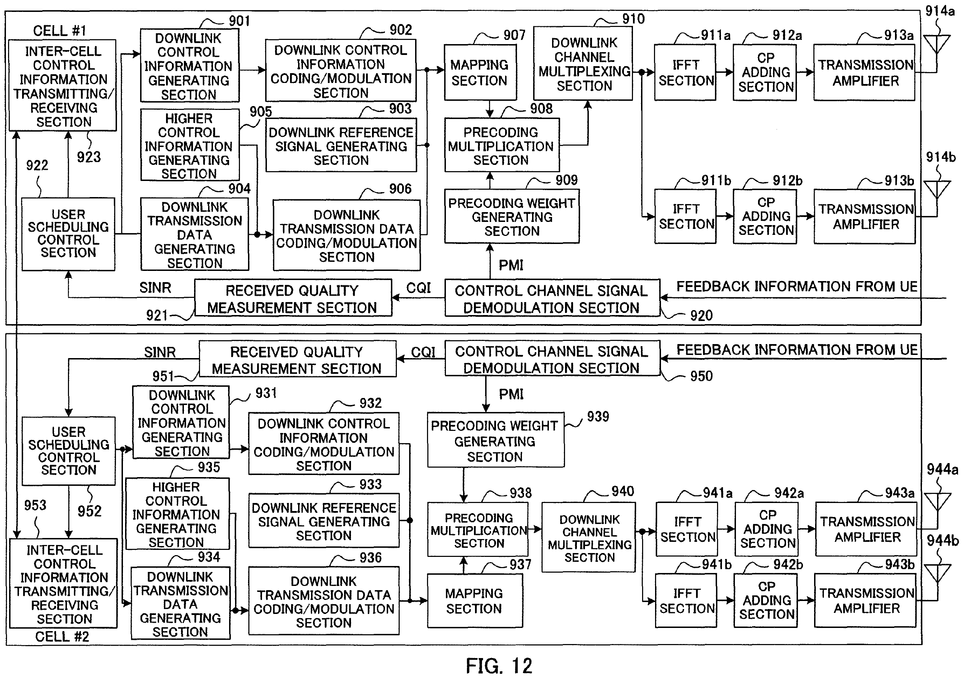

Now, the function blocks of a radio base station apparatus having a different configuration from the radio base station apparatus shown in FIG. 11 will be described with reference to FIG. 12. The radio base station apparatus shown in FIG. 12 has an autonomous distributed control-type radio base station configuration. In the event of autonomous distributed control, a plurality of radio base station apparatuses each execute radio resource allocation control such as scheduling. In this case, the feedback information (CQI) is used as information that is necessary for radio resource allocation and so on in the user scheduling control sections 922 and 952 in each of a plurality of radio base station apparatuses.

Note that the function blocks of FIG. 12 primarily relate to the processing content of the baseband processing section 204 shown in FIG. 9. Also, the function blocks shown in FIG. 12 are simplified to explain the present invention, and assumed to have the configurations which a baseband processing section 204 should normally have. Also, function blocks in FIG. 12 that are the same as in FIG. 11 will be assigned the same codes as in FIG. 11, and their detailed descriptions will be omitted.

The transmission section on the cell 1 side has a downlink control information generating section 901, a downlink control information coding/modulation section 902, a downlink reference signal generating section 903, a downlink transmission data generating section 904, a higher control information generating section 905 and a downlink transmission data coding/modulation section 906, a mapping section 907, a precoding multiplication section 908, a precoding weight generating section 909, a downlink channel multiplexing section 910, IFFT sections 911a and 911b, CP adding sections 912a and 912b, transmission amplifiers 913a and 913b, transmitting antennas 914a and 914b, a control channel signal demodulation section 920, a received quality measurement section 921, a user scheduling control section 922, and an inter-cell control information transmitting/receiving section 923.

The transmission section on the cell 2 side similarly has a downlink control information generating section 931, a downlink control information coding/modulation section 932, a downlink reference signal generating section 933, a downlink transmission data generating section 934, a higher control information generating section 935, a downlink transmission data coding/modulation section 936, a mapping section 937, a precoding multiplication section 938, a precoding weight generating section 939, a downlink channel multiplexing section 940, IFFT sections 941a and 941b, CP adding sections 942a and 942b, transmission amplifiers 943a and 943b, transmitting antennas 944a and 944b, a control channel signal demodulation section 950, a received quality measurement section 951, a user scheduling control section 952, and an inter-cell control information transmitting/receiving section 953.

The functions of the higher control information generating section 935, control channel signal demodulation section 950, received quality measurement section 951, and user scheduling control section 952 provided in the transmission section of the cell 2 side are the same as the functions of the higher control information generating section 905, control channel signal demodulation section 920, received quality measurement section 921 and user scheduling control section 922 provided in the transmission section of the cell 1 side.

That is to say, the higher control information generating section 935 generates higher control information to be transmitted and received by higher layer signaling (for example, RRC signaling), and outputs the generated higher control information to the downlink transmission data coding/modulation section 936. The downlink transmission data coding/modulation section 936 performs channel coding and data modulation for the downlink transmission data and the higher control information, and output the results to the mapping section 937.

Also, the control channel demodulation section 950 demodulates the control channel signal reported from the user terminal 10 by the PUCCH, outputs the PMIs included in the control channel signal to the precoding weight generating section 939, and outputs the CQIs to the received quality measurement section 951. Note that, when the CQIs are reported by the PUSCH, an uplink data channel demodulation section, which is not shown, demodulates the uplink transmission data, and outputs the CQIs included in the uplink transmission data to the received quality measurement section 951.

Also, the received quality measurement section 951 calculates the SINRs based on the CQIs reported from the control channel demodulation section 950 (or the uplink data channel demodulation section). The calculated SINRs are reported to the user scheduling control section 952. The user scheduling control section 952 executes scheduling control for the downlink control information of the target cell, based on the SINRs. Also the SINRs are used to determine the modulation schemes and coding rates in the downlink control information coding/modulation section 932 and the downlink transmission data coding/modulation section 936.

The inter-cell control information transmitting/receiving sections 923 and 953 are connected by an X2 interface, and transmit and receive, with each other, the timing information, scheduling information and so on that are output from the user scheduling control sections 922 and 952. By this means, coordination between cells is made possible.

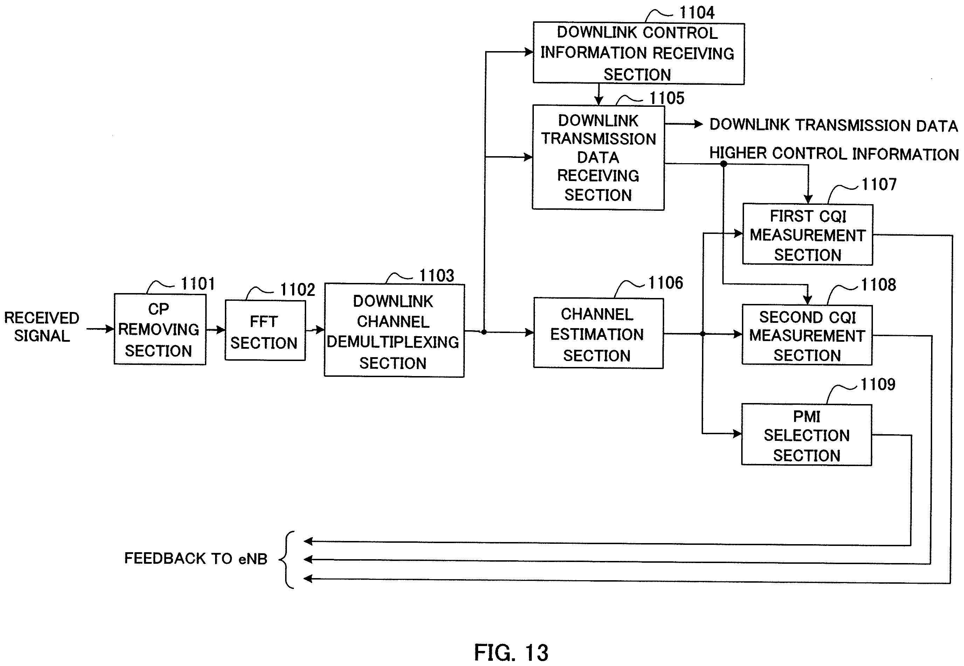

The function blocks of a user terminal will be described with reference to FIG. 13. Note that the function blocks of FIG. 13 primarily relate to the processing content of the baseband processing section 104 shown in FIG. 10. Also, the function blocks shown in FIG. 13 are simplified to explain the present invention, and assumed to have the configurations which a baseband processing section should normally have.

The receiving section of the user terminal has a CP removing section 1101, an FFT section 1102, a downlink channel demultiplexing section 1103, a downlink control information receiving section 1104, a downlink transmission data receiving section 1105, a channel estimation section 1106, the first CQI measurement section 1107, a second CQI measurement section 1108, and a PMI selection section 1109. The first CQI measurement section 1107 and the second CQI measurement section 1108 function as a channel state information generating section.

The transmission signal transmitted from the radio base station apparatus eNB is received by the transmitting/receiving antenna 101 shown in FIG. 10 and output to the CP removing section 1101. The CP removing section 1101 removes the CPs from the received signal and outputs the result to the FFT section 1102. The FFT section 1102 performs a fast Fourier transform (FFT) of the signal, from which the CPs have been removed, and converts the time domain signal into a frequency domain signal. The FFT section 1102 outputs the signal having been converted into a frequency domain signal to the downlink channel demultiplexing section 1103. The downlink channel demultiplexing section 1103 demultiplexes the downlink channel signal into downlink control information, downlink transmission data, higher control information and downlink reference signal. The downlink channel demultiplexing section 1103 outputs the downlink control information to the downlink control information receiving section 1104, outputs the downlink transmission data and the higher control information to the downlink transmission data receiving section 1105, and outputs the downlink reference signal to the channel estimation section 1106.

The downlink control information receiving section 1104 demodulates the downlink control information, and outputs the demodulated control information to the downlink transmission data receiving section 1105. The downlink transmission data receiving section 1105 demodulates the downlink transmission data using the control information. Also, the downlink transmission data receiving section 1105 demodulates the higher control information included in the downlink transmission data and reports the result to the first CQI measurement section 1107 and the second CQI measurement section 1108. The channel estimation section 1106 estimates the channel state using the downlink reference signal, and outputs the estimated channel state to the first CQI measurement section 1107, the second CQI measurement section 1108 and the PMI selection section 1109.

The first CQI measurement section 1107 measures CQIs, from the channel state reported from the channel estimation section 1106, based on the higher control information reported from the downlink transmission data receiving section 1105. To be more specific, when it is reported, by higher control information, that CoMP transmission is not adopted, CQIs are measured in the mode defined in the LTE system. The CQIs measured in the first CQI measurement section 1107 are reported to the radio base station apparatus 20 as feedback information.

The second CQI measurement section 1108 measures CQIs, from the channel state reported from the channel estimation section 1106, based on the higher control information reported from the downlink transmission data receiving section 1105. To be more specific, when it is reported, by higher control information, that CoMP transmission is adopted, CQIs are measured in the above-described first to fourth modes.

For example, when the feedback method according to the first mode is adopted, the second CQI measurement section 1108 calculates CQIs according to formulas 5 and 6. Similarly, when the feedback method according to the second mode is adopted, the second CQI measurement section 1108 calculates CQIs according to formulas 10 and 11. Furthermore, when the feedback method according to the third mode is adopted, the second CQI measurement section 1108 calculates CQIs according to formulas 15 and 16. When the feedback method according to the fourth mode is adopted, the second CQI measurement section 1108 calculates CQIs according to formulas 20 and 21.

The CQIs measured in the second CQI measurement section 1108 are reported to the radio base station apparatus 20 as feedback information. Note that the CQIs measured in the second CQI measurement section 1108 are transmitted, in a predetermined cycle or at timing (or cycle) reported by higher control information, by the uplink data channel (PUSCH) or the uplink control channel (PUCCH).

The PMI selection section 1109 selects PMIs, using a codebook, from the channel state reported from the channel estimation section 1106. The PMIs selected in the PMI selection section 1109 are reported to the radio base station apparatus 20 as feedback information.

In the radio communication system of the above configuration, first, the radio base station apparatus 20 transmits a reference signal (CSI-RS). When CoMP transmission is adopted, the radio base station apparatus 20 executes muting as appropriate and transmits CSI-RSs in a mode to match the CQI measurement. To be more specific, when the above-described first to third modes are adopted, the radio base station apparatus 20 executes muting.

Next, in the user terminal 10, the first CQI measurement section 1107 or the second CQI measurement section 1108 of the user terminal 10 measure CQIs, based on the reporting by the higher control information. That is to say, when it is reported that CoMP transmission is not adopted, CQIs are measured in the first CQI measurement section 1107, in the mode defined in the LTE system, and, when it is reported that CoMP transmission is adopted, CQIs are measured in the second CQI measurement section 1108, in the above-described first to fourth modes.

After that, the user terminal 10 reports the measured CQIs to the radio base station apparatus 20. The CQIs are transmitted in a predetermined cycle or at timing (or cycle) reported by higher control information, by the uplink data channel (PUSCH) or the uplink control channel (PUCCH). The radio base station apparatus 20 calculates SINRs based on the CQIs reported from the user terminal 10, determines the modulation scheme and coding rate based on the SINRs, and also executes scheduling control.

As described above, with the feedback methods according to the first to third modes, the user terminal 10 generates a plurality of pieces of channel state information including channel state information, in which interference from the serving cell and/or a coordinated cell is cancelled, when a plurality of radio base station apparatuses 20 are coordinated and perform transmission, so that it is possible to include information that is necessary to calculate received quality upon CoMP transmission, and feed back channel state information, from which adequate received quality can be calculated upon CoMP transmission.

Also, with the feedback method according to the fourth mode, the user terminal 10 generates a plurality of pieces of channel state information, including channel state information that is represented by the ratio of received signal components from the serving cell and received signal components from a coordinated cell when a plurality of radio base station apparatuses 20 are coordinated and perform transmission, so that it is possible to include information that is necessary to calculate received quality upon CoMP transmission, and feed back channel state information, from which adequate received quality can be calculated upon CoMP transmission.

Note that the present invention is not limited to the descriptions contained herein, and can be implemented with various changes. For example, although modes have been shown herein as examples of cancelling interference of other cells by using muting, interference may be cancelled by using other methods as well. Also, for example, the relationships of connection between elements, the functions of elements and so on shown herein can be implemented with various changes. Also, the configuration shown herein can be implemented in various combinations. Besides, the present invention can be changed with various changes without departing from the present invention.

**Claims**

1. A radio communication system (1) operating in a coordinated multiple-point transmission/reception, CoMP, technique and comprising a plurality of radio base station apparatuses (20A, 20B) and a user terminal (10A, 10B) that is configured to communicate with the plurality of radio base station apparatuses (20A, 20B), wherein:

   the radio base station apparatuses (20A, 20B) comprise:

   a transmission section (201A, 201B) configured to transmit a reference signal for channel state measurement to the user terminal (10A, 10B); and
   a receiving section (201A, 201B) configured to receive channel state information generated in the user terminal (10A, 10B) based on the reference signal; and
   the user terminal (10A, 10B) comprises:

   a reception section configured to receive the reference signal:

   a channel state information generating section (1107, 1108) configured to generate a plurality of pieces of channel state information based on the reference signal; and
   a transmission section configured to transmit the plurality of pieces of channel state information to the one or more radio base station apparatus (20A, 20B), **characterized by** that
   the channel state information generating section (1108) generates one of the plurality of pieces of channel state information, that is represented by a ratio of a received signal component from a serving cell and a received signal component from a coordinated cell, when the plurality of radio base station apparatuses (20A, 20B) coordinate and perform transmission.

2. The radio communication system (1) according to claim 1, wherein the base station apparatus further comprises a calculating section (921) configured to calculate a Signal to Interference and Noise Ratio, SINR, from the plurality of pieces of channel state information based on transmission weights by which signals transmitted from the plurality of base station apparatuses are multiplied when the plurality of base station apparatuses coordinate and perform transmission, when coordinated multiple-point transmission is adopted.

3. The radio communication system (1) according to claim 1 or 2, wherein the channel state information generating section (1108) generates $FB_H$ as the one of the plurality of pieces of channel state information that is determined from following formulas 21, and generates $FB_G$ as another of the plurality of pieces of channel state information that is determined from following formula 20, where the received signal component from the serving cell is $S_1$, the received signal component from the coordinated cell is $S_2$, an interference component from a cell other than the serving cell and the coordinated cell is I, and a noise component is N:

$$FB_G = \frac{S_1}{S_2 + I + N} \quad \text{... Formula 20}$$

$$FB_H = \frac{S_1}{S_2} \quad \text{... Formula 21}$$

4. The radio communication system (1) according to claim 1 or 2, wherein the channel state information generating section switches the channel state information to generate, based on a higher layer control signal which reports whether or not the plurality of radio base station apparatuses coordinate and perform transmission.

5. The radio communication system (1) according to claim 4, wherein the channel state information generating section (1107) generates FB1 as one of the plurality of pieces of channel state information that is determined from following formula 1 and FB2 as another of the plurality of pieces of channel state information that is determined from following formula 2 when the plurality of radio base station apparatuses are not coordinated and do not perform transmission, where the received signal component from the serving cell is S1, the received signal component from the coordinated cell is S2, an interference component from a cell other than the serving cell and the coordinated cell is I, and a noise component is N:

$$FB_1 = \frac{S_1}{S_2 + I + N} \qquad \text{... Formula 1}$$

$$FB_2 = \frac{S_2}{S_1 + I + N} \qquad \text{... Formula 2}$$

6. The radio communication system (1) according to claim 1, wherein the plurality of pieces of channel state information are transmitted by an uplink data channel.

7. The radio communication system (1) according to claim 1, wherein the plurality of pieces of channel state information are transmitted by an uplink control channel.

8. The radio communication system (1) according to claim 7, wherein the plurality of pieces of channel state information are transmitted in a same subframe.

9. The radio communication system (1) according to claim 7, wherein the plurality of pieces of channel state information are transmitted in different subframes.

10. The radio communication system (1) according to claim 1, wherein the plurality of pieces of channel state information are transmitted in a same cycle.

11. The radio communication system (1) according to claim 1, wherein the plurality of pieces of channel state information are transmitted in different cycles.

12. The radio communication system (1) according to claim 3, wherein the calculation section (921) calculates the SINR based on

$$SINR = \frac{w_1 S_1}{I + N} = \frac{w_1 FB_G}{1 - FB_G FB_H} \qquad \text{... Formula 22}$$

where the received signal component from the serving cell is $S_1$, the received signal component from the coordinated cell is $S_2$, an interference component from a cell other than the serving cell and the coordinated cell is I, a noise component is N, and $w_1$, is a transmission weight of each cell and where $FB_G$ is calculated according to Formula 20 and $FB_H$ is calculated according to Formula 21.

13. The radio communication system (1) according to claim 3, wherein the calculation section (921) calculates the SINR based on

$$SINR = \frac{w_1 S_1}{w_2 S_2 + I + N} = \frac{w_1 FB_G}{1 - (1 - w_2) FB_G FB_H} \quad \text{... Formula 23}$$

where the received signal component from the serving cell is $S_1$, the received signal component from the coordinated cell is $S_2$, an interference component from a cell other than the serving cell and the coordinated cell is I, a noise component is N, and $w_1$ and $w_2$ are transmission weights of each cell and where $FB_G$ is calculated according to Formula 20 and $FB_H$ is calculated according to Formula 21.

**Patentansprüche**

1. Funkkommunikationssystem (1), das in einer koordinierten Mehrpunktübertragungs-/-empfangstechnik, CoMP, arbeitet und eine Mehrzahl von Funkbasisstationsvorrichtungen (20A, 20B) und ein Benutzerendgerät (10A, 10B) umfasst, das dazu konfiguriert ist, mit der Mehrzahl von Funkbasisstationsvorrichtungen (20A, 20B) zu kommunizieren, wobei:

   die Funkbasisstationsvorrichtungen (20A, 20B) umfassen:

   einen Sendeabschnitt (201A, 201B), der dazu konfiguriert ist, ein Referenzsignal zur Kanalzustandsmessung an das Benutzerendgerät (10A, 10B) zu übertragen; und
   einen Empfangsabschnitt (201A, 201B), der dazu konfiguriert ist, Kanalzustandsinformationen zu empfangen, die in dem Benutzerendgerät (10A, 10B) erzeugt wurden, auf Basis des Referenzsignals; und

   wobei das Benutzerendgerät (10A, 10B) umfasst:

   einen Empfangsabschnitt, der dazu konfiguriert ist, das Referenzsignal zu empfangen:

   einen Kanalzustandsinformations-Erzeugungsabschnitt (1107, 1108), der dazu konfiguriert ist, eine Mehrzahl von Kanalzustandsinformationsstücken auf Basis des Referenzsignals zu erzeugen; und
   einen Sendeabschnitt, der dazu konfiguriert ist, die Mehrzahl von Kanalzustandsinformationsstücken an die eine oder mehreren Funkbasisstationsvorrichtungen (20A, 20B) zu übertragen, **dadurch gekennzeichnet, dass**

   der Kanalzustandsinformations-Erzeugungsabschnitt (1108) eine von der Mehrzahl von Kanalzustandsinformationsstücken erzeugt, die durch ein Verhältnis einer empfangenen Signalkomponente von einer dienenden Zelle und einer empfangenen Signalkomponente von einer koordinierten Zelle dargestellt werden, wenn die Mehrzahl von Funkbasisstationsvorrichtungen (20A, 20B) eine Übertragung koordinieren und durchführen.

2. Funkkommunikationssystem (1) nach Anspruch 1, wobei die Basisstationsvorrichtung weiter einen Berechnungsabschnitt (921) umfasst, der dazu konfiguriert ist, ein Signal-zu-Interferenz-und-Rausch-Verhältnis, SINR, aus der Mehrzahl von Kanalzustandsinformationsstücken auf Basis von Übertragungsgewichten zu berechnen, mit welchen die Signale, die von der Mehrzahl von Basisstationsvorrichtungen übertragen werden, multipliziert werden, wenn die Mehrzahl von Basisstationsvorrichtungen eine Übertragung koordinieren und durchführen, wenn eine koordinierte Mehrpunktübertragung angewendet wird.

3. Funkkommunikationssystem (1) nach Anspruch 1 oder 2, wobei der Kanalzustandsinformations-Erzeugungsabschnitt (1108) $FB_H$ als die eine der Mehrzahl von Kanalzustandsinformationsstücken erzeugt, die aus den folgenden Formeln 21 bestimmt wird, und $FB_G$ als eine weitere der Mehrzahl von Kanalzustandsinformationsstücken erzeugt, die aus der folgenden Formel 20 bestimmt wird, wobei die empfangene Signalkomponente von den dienenden Zellen $S_1$ ist, die empfangene Signalkomponente von der koordinierten Zelle $S_2$ ist, eine Interferenzkomponente von einer Zelle, die von der dienenden Zelle und der koordinierten Zelle verschieden ist, I ist, und eine Rauschkomponente N ist:

$$FB_G = \frac{S_1}{S_2 + I + N}$$

...Formel 20

$$FB_H = \frac{S_1}{S_2}$$

...Formel 21

4. Funkkommunikationssystem (1) nach Anspruch 1 oder 2, wobei der Kanalzustandsinformations-Erzeugungsabschnitt die zu erzeugenden Kanalzustandsinformationen auf Basis eines höherschichtigen Steuersignals umschaltet, das berichtet, ob oder ob nicht die Mehrzahl von Funkbasisstationsvorrichtungen eine Übertragung koordinieren und durchführen.

5. Funkkommunikationssystem (1) nach Anspruch 4, wobei der Kanalzustandsinformations-Erzeugungsabschnitt (1107) FB1 als eines der Mehrzahl von Kanalzustandsinformationsstücken erzeugt, das aus der folgenden Formel 1 bestimmt wird, und FB2 als ein anderes der Mehrzahl von Kanalzustandsinformationsstücken bestimmt, das aus der folgenden Formel 2 bestimmt wird, wenn die Mehrzahl von Funkbasisstationsvorrichtungen nicht koordiniert sind und keine Übertragung durchführen, wobei die empfangene Signalkomponente von der dienenden Zelle S1 ist, die empfangene Signalkomponente von der koordinierten Zelle S2 ist, eine Interferenzkomponente von einer Zelle, die von der dienenden Zelle und der koordinierten Zelle verschieden ist, I ist, und eine Rauschkomponente N ist:

$$FB_1 = \frac{S_1}{S_2 + I + N}$$

...Formel 1

$$FB_2 = \frac{S_2}{S_1 + I + N}$$

...Formel 2

6. Funkkommunikationssystem (1) nach Anspruch 1, wobei die Mehrzahl von Kanalzustandsinformationsstücken mittels eines Uplink-Datenkanals übertragen werden.

7. Funkkommunikationssystem (1) nach Anspruch 1, wobei die Mehrzahl von Kanalzustandsinformationsstücken mittels eines Uplink-Steuerkanals übertragen werden.

8. Funkkommunikationssystem (1) nach Anspruch 7, wobei die Mehrzahl von Kanalzustandsinformationsstücken in einem gleichen Subframe übertragen wird.

9. Funkkommunikationssystem (1) nach Anspruch 7, wobei die Mehrzahl von Kanalzustandsinformationsstücken in verschiedenen Subframes übertragen wird.

10. Funkkommunikationssystem (1) nach Anspruch 1, wobei die Mehrzahl von Kanalzustandsinformationsstücken in einem gleichen Zyklus übertragen wird.

11. Funkkommunikationssystem (1) nach Anspruch 1, wobei die Mehrzahl von Kanalzustandsinformationsstücken in verschiedenen Zyklen übertragen wird.

12. Funkkommunikationssystem (1) nach Anspruch 3, wobei der Berechnungsabschnitt (921) das SINR berechnet auf Basis von

$$SINR = \frac{w_1 S_1}{I + N} = \frac{w_1 FB_G}{1 - FB_G FB_H}$$

...Formel 22

wobei die empfangene Signalkomponente von der dienenden Zelle $S_1$ ist, die empfangene Signalkomponente von der koordinierten Zelle $S_2$ ist, eine Interferenzkomponente von einer Zelle, die von der dienenden Zelle und der koordinierten Zelle verschieden ist, I ist, eine Rauschkomponente N ist, und $w_1$ ein Übertragungsgewicht jeder Zelle ist, und wobei $FB_G$ gemäß Formel 20 berechnet wird und $FB_H$ gemäß Formel 21 berechnet wird.

13. Funkkommunikationssystem (1) nach Anspruch 3, wobei der Berechnungsabschnitt (921) das SINR berechnet auf Basis von

$$SINR = \frac{w_1 S_1}{w_2 S_2 + I + N} = \frac{w_1 FB_G}{1 - (1 - w_2) FB_G FB_H}$$

...Formel 23

wobei die empfangene Signalkomponente von der dienenden Zelle $S_1$ ist, die empfangene Signalkomponente von der koordinierten Zelle $S_2$ ist, eine Interferenzkomponente von einer Zelle, die von der dienenden Zelle und der koordinierten Zelle verschieden ist, I ist, eine Rauschkomponente N ist, und $w_1$ und $w_2$ Übertragungsgewichte jeder Zelle sind, und wobei $FB_G$ gemäß Formel 20 berechnet wird und $FB_H$ gemäß Formel 21 berechnet wird.

**Revendications**

1. Système de radiocommunication (1) fonctionnant selon une technique d'émission/réception multipoint coordonnée, CoMP, et comprenant une pluralité d'appareils formant station de base radio (20A, 20B) et un terminal utilisateur (10A, 10B) qui est configuré pour communiquer avec la pluralité d'appareils formant station de base radio (20A, 20B), dans lequel :

les appareils formant station de base radio (20A, 20B) comprennent :

une section d'émission (201A, 201B) configurée pour émettre un signal de référence pour mesure d'état de canal vers le terminal utilisateur (10A, 10B) ; et
une section de réception (201A, 201B) configurée pour recevoir des informations d'état de canal produites dans le terminal utilisateur (10A, 10B) sur la base du signal de référence ; et
le terminal utilisateur (10A, 10B) comprend :

une section de réception configurée pour recevoir le signal de référence ;
une section de production d'informations d'état de canal (1107, 1108) configurée pour produire une pluralité de morceaux d'informations d'état de canal sur la base du signal de référence ; et
une section d'émission configurée pour émettre la pluralité de morceaux d'informations d'état de canal vers le au moins un appareil formant station de base radio (20A, 20B), **caractérisé en ce que**
la section de production d'informations d'état de canal (1108) produit un de la pluralité de morceaux d'informations d'état de canal, qui est représenté par un rapport d'une composante de signal reçu en provenance d'une cellule servante et d'une composante de signal reçu en provenance d'une cellule coordonnée, quand la pluralité d'appareils formant station de base radio (20A, 20B) coordonne et effectue l'émission.

2. Système de radiocommunication (1) selon la revendication 1, dans lequel l'appareil formant station de base comprend en outre une section de calcul (921) configurée pour calculer un Rapport Signal sur Interférence et Bruit, SINR, à partir de la pluralité de morceaux d'informations d'état de canal sur la base de pondérations d'émission par lesquelles des signaux émis en provenance de la pluralité d'appareils formant station de base sont multipliés quand la pluralité d'appareils formant station de base coordonne et effectue l'émission, quand une émission multipoint coordonnée est adoptée.

3. Système de radiocommunication (1) selon la revendication 1 ou 2, dans lequel la section de production d'informations d'état de canal (1108) produit $FB_H$ comme le premier de la pluralité de morceaux d'informations d'état de canal qui est déterminé à partir des formules suivantes 21, et produit $FB_G$ comme un autre de la pluralité de morceaux d'informations d'état de canal qui est déterminé à partir de la formule suivante 20, où la composante de signal reçu en provenance de la cellule servante est $S_1$, la composante de signal reçu en provenance de la cellule coordonnée est $S_2$, une composante d'interférence en provenance d'une cellule autre que la cellule servante et la cellule coordonnée est I, et une composante de bruit est N :

$$FB_G = \frac{S_1}{S_2 + I + N}$$

... Formule 20

$$FB_H = \frac{S_1}{S_2}$$

... Formule 21

4. Système de radiocommunication (1) selon la revendication 1 ou 2, dans lequel la section de production d'informations d'état de canal commute les informations d'état de canal pour produire, sur la base d'un signal de commande de couche supérieure qui annonce si la pluralité d'appareils formant station de base radio coordonne et effectue ou non une émission.

5. Système de radiocommunication (1) selon la revendication 4, dans lequel la section de production d'informations d'état de canal (1107) produit FB1 comme un premier de la pluralité de morceaux d'informations d'état de canal qui est déterminé à partir de la formule suivante 1 et FB2 comme un autre de la pluralité de morceaux d'informations d'état de canal qui est déterminé à partir de la formule suivante 2 quand la pluralité d'appareils formant station de base radio n'est pas coordonnée et n'effectue pas d'émission, où la composante de signal reçu en provenance de la cellule servante est S1, la composante de signal reçu en provenance de la cellule coordonnée est S2, une composante d'interférence en provenance d'une cellule autre que la cellule servante et la cellule coordonnée est I, et une composante de bruit est N :

$$FB_1 = \frac{S_1}{S_2 + I + N}$$

... Formule 1

$$FB_2 = \frac{S_2}{S_1 + I + N}$$

... Formule 2

6. Système de radiocommunication (1) selon la revendication 1, dans lequel la pluralité de morceaux d'informations d'état de canal est émise par un canal de données en liaison montante.

7. Système de radiocommunication (1) selon la revendication 1, dans lequel la pluralité de morceaux d'informations d'état de canal est émise par un canal de commande en liaison montante.

8. Système de radiocommunication (1) selon la revendication 7, dans lequel la pluralité de morceaux d'informations d'état de canal est émise dans une même sous-trame.

9. Système de radiocommunication (1) selon la revendication 7, dans lequel la pluralité de morceaux d'informations d'état de canal est émise dans des sous-trames différentes.

**10.** Système de radiocommunication (1) selon la revendication 1, dans lequel la pluralité de morceaux d'informations d'état de canal est émise dans un même cycle.

**11.** Système de radiocommunication (1) selon la revendication 1, dans lequel la pluralité de morceaux d'informations d'état de canal est émise dans des cycles différents.

**12.** Système de radiocommunication (1) selon la revendication 3, dans lequel la section de calcul (921) calcule le SINR sur la base de

$$SINR = \frac{w_1 S_1}{I+N} = \frac{w_1 FB_G}{1 - FB_G FB_H}$$

... Formule 22

où la composante de signal reçu en provenance de la cellule servante est $S_1$, la composante de signal reçu en provenance de la cellule coordonnée est $S_2$, une composante d'interférence en provenance d'une cellule autre que la cellule servante et la cellule coordonnée est I, une composante de bruit est N, et $w_1$ est une pondération d'émission de chaque cellule et où $FB_G$ est calculé selon la Formule 20 et $FB_H$ est calculé selon la Formule 21.

**13.** Système de radiocommunication (1) selon la revendication 3, dans lequel la section de calcul (921) calcule le SINR sur la base de

$$SINR = \frac{w_1 S_1}{w_2 S_2 + I + N} = \frac{w_1 FB_G}{1 - (1 - w_2) FB_G FB_H}$$

... Formule 23

où la composante de signal reçu en provenance de la cellule servante est $S_1$, la composante de signal reçu en provenance de la cellule coordonnée est $S_2$, une composante d'interférence en provenance d'une cellule autre que la cellule servante et la cellule coordonnée est I, une composante de bruit est N, et $w_1$ et $w_2$ sont des pondérations d'émission de chaque cellule et où $FB_G$ est calculé selon la Formule 20 et $FB_H$ est calculé selon la Formule 21.

MAIN LOBE CONTROL FOR DESIRED USER

NULL CONTROL FOR ANOTHER CELL USERS

eNB

UE

UE

RRE

CELL

## FIG. 1A

COHERENT/NON-COHERENT TRANSMISSION

eNB

UE

RRE

CELL

## FIG. 1B

DYNAMIC CELL SELECTION

eNB

UE

RRE

CELL

## FIG. 1C

CELL 1

RRE1

OPTICAL
REMOTE
CONFIGURATION

RRE2

CELL 2

FIG. 2A

CELL 1

eNB

X2 INTERFACE

eNB

CELL 2

FIG. 2B

FIG. 3

FIG. 4A

FIG. 4B

FIG. 4C

28

<WITHOUT MUTING>

FIG. 5A

<WITH MUTING>

FIG. 5B

FIG. 6

EP 2 961 221 B1

RI

CQI(FB$_x$,FB$_y$)+PMI

SUBFRAME

OFFSET

N$_{PD}$

TIME

N$_{PD}$ × M$_{RI}$

FIG. 7A

RI

CQI(FB$_x$)+PMI

CQI(FB$_y$)+PMI

TIME

FIG. 7B

FIG. 8

FIG. 9

EP 2 961 221 B1

FIG. 10

EP 2 961 221 B1

FIG. 11

FIG. 12

FIG. 13

EP 2 961 221 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010036159 A1
- US 2011281585 A1
- WO 2011115703 A1

### Non-patent literature cited in the description

- Feasibility Study for Evolved UTRA and UTRAN. *3GPP, TR 25.912 (V7.1.0),* September 2006